# EUROPEAN PATENT APPLICATION

(11) **EP 3 119 084 A1**
(43) Date of publication of application: **18.01.2017**
(21) Application number: 16179458.1
(22) Date of filing: 14.07.2016
(51) Int. Cl.: H04N 7/14, G06K 9/00, H04M 3/56

(54) **ELECTRONIC INFORMATION TERMINAL, IMAGE PROCESSING APPARATUS AND IMAGE PROCESSING SYSTEM**

(30) Priority: 16.07.2015 JP 2015142323; 16.06.2016 JP 2016119676
(71) Applicant: Ricoh Company, Ltd., Tokyo 143-8555 (JP)
(72) Inventor: SHIMOHIRA, Yoshihiko, Tokyo, 143-8555 (JP)
(74) Representative: Schwabe - Sandmair - Marx

(57) **Abstract**

An electronic information terminal (1) connectable with an image processing apparatus (2) via a communication network (N) includes a display (101), a first memory (103) to temporarily store stroke data generated by an operation event to the display (101), a first network condition controller (105) to detect a condition of the communication network (N), and a transmitter (104) to read out the stroke data from the first memory (103) and to transmit the stroke data to the image processing apparatus (2) via the communication network (N) based on the condition of the communication network (N) detected by the first network condition controller (105).

## Description

### BACKGROUND

### Technical Field

This disclosure relates to an electronic information terminal, an image processing apparatus, and an image processing system.

### Background Art

Recently, electronic information terminals such as electronic whiteboards and electronic information boards disposed at a plurality of remote positions are connected via a communication network to devise electronic conferences and presentations using a plurality of electronic information terminals. WO2009/151940 discloses a multi-media conference system that pen stroke data drawn on one white board (electronic information terminal) is transmitted to other white boards at remote locations via a multi-media conference server. In this multi-media conference system, the other white boards each receive digital data from the one white board, and then the pen stroke is drawn on the other white boards based on the received digital data. Therefore, a plurality of users at remote locations can share writing drawn at each white board.

However, if the one white board being input with the pen stroke is disconnected from the communication network when the pen stroke data is being transmitted, a part of the pen stroke data to be received by other white boards may vanish.

### SUMMARY

As one aspect of the present invention, an electronic information terminal connectable with an image processing apparatus via a communication network is devised. The electronic information terminal includes a display, a first memory to temporarily store stroke data generated by an operation event to the display, a first network condition controller to detect a condition of the communication network, and a transmitter to read out the stroke data from the first memory and to transmit the stroke data to the image processing apparatus via the communication network based on the condition of the communication network detected by the first network condition controller.

As another aspect of the present invention, an image processing apparatus connectable with an electronic information terminal via a communication network is devised. The image processing apparatus includes a second memory to temporarily store stroke data sequentially received from the electronic information terminal via the communication network as a string of stroke data, and a second image generator to generate a second image based on the string of stroke data stored in the second memory. The second image generator generates the second image when the string of stroke data is stored in the second memory.

As another aspect of the present invention, an image processing system is devised. The image processing system includes an electronic information terminal, and an image processing apparatus connectable with the electronic information terminal via a communication network. The electronic information terminal includes a display, a first memory to temporarily store stroke data generated by an operation event to the display, a first network condition controller to detect a condition of the communication network, a transmitter to read out the stroke data from the first memory and to transmit the stroke data to the image processing apparatus via the communication network based on the condition of the communication network detected by the first network condition controller, an operation condition display controller to display a first image, generated from the stroke data, on the display; and an image display controller to display an image received from the image processing apparatus on a layer different from a layer displaying the first image. The image processing apparatus includes a second memory to temporarily store stroke data sequentially received from the electronic information terminal via the communication network as a string of stroke data, a second image generator to generate a second image based on the string of stroke data stored in the second memory, an image synthesizer to synthesize the second image displayed on a layer and a background image to be displayed on a layer, different from the layer displaying the second image, as a synthesized image, a display unit to display the synthesized image generated by the image synthesizer or the background image, an image transmitter to transmit the synthesized image or the background image displayed by the display unit to the electronic information terminal, a background image switching unit to switch the background image displayed by the display unit to another background image, and an event transmitter to transmit an image switching notice to the electronic information terminal when the background image switching unit switches the background image displayed by the display unit to the another background image. The operation condition display controller deletes the first image when the electronic information terminal receives the image switching notice from the image processing apparatus.

As to the above described aspects of the present invention, even if the electronic information terminal is disconnected from the communication network when stroke data is being transmitted, the data vanishing such as partial data loss of stroke data can be avoided. Further, the above described aspects of the present invention can be applied to the image processing apparatus that processes the transmission stroke data, and the image processing system including the electronic information terminal and the image processing apparatus. As to the above described aspects of the present invention, since the transmitter reads out the stroke data from the transmission-use memory and then transmits the stroke data based on the condition of the communication network detected by the network condition controller, the data vanishing such as partial data loss of stroke data can be avoided.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic configuration of an image processing system of a first example embodiment;
FIG. 2 is an example of a hardware configuration of an electronic information terminal and a server of first example embodiment;
FIG. 3 is a functional block diagram of the electronic information terminal and the server of the first example embodiment;
FIG. 4 is a sequential chart illustrating a process of a basic operation of the electronic information terminal and the server of the first example embodiment;
FIG. 5 illustrates an example of a layer structure of a screen displayed on the electronic information terminal of the first example embodiment;
FIG. 6 illustrates a schematic process of image transmission by the server of the first example embodiment;
FIG. 7 illustrates an example of data structure of mouse events of the first example embodiment;
FIG. 8 is a sequential chart illustrating a process of transmission of the mouse events of the first example embodiment;
FIG. 9 is another sequential chart illustrating a process of transmission of the mouse events of the first example embodiment;
FIG. 10 is a flow chart showing the steps of a process of transmitting the mouse events from the electronic information terminal of the first example embodiment;
FIG. 11 schematically illustrates an image processing when the network connection between the electronic information terminal and the server is disconnected;
FIG. 12 schematically illustrates another image processing when the network connection between the electronic information terminal and the server is disconnected;
FIG. 13 is a flow chart showing the steps of a process of ON-OFF control of LFB capability by a network condition controller;
FIG. 14 illustrates an example of image processing of conventional arts;
FIG. 15 is a flow chart showing the steps of a process of reporting page switching notice of the second example embodiment; and
FIG. 16 is a flow chart showing the steps of a process of deleting a LFB stroke of the second example embodiment.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, one or more apparatuses or systems according to one or more example embodiments are described hereinafter.

This disclosure describes an image processing system configured with at least one electronic information terminal and at least one server connectable with each other via a communication network. When stroke data is generated at the electronic information terminal, the electronic information terminal transmits the stroke data to the server. When the server receives the stroke data from the electronic information terminal, the server generates an image of the stroke from the received stroke data, and transmits the image of the stroke to the electronic information terminal. Then, the electronic information terminal displays the image transmitted from the server on a display. Further, the electronic information terminal has the local feedback capability, with which the electronic information terminal can generate a stroke image based on the generated stroke data, and displays the stroke image on the display by superimposing the stroke image on the image transmitted from the server. As to the image processing system, a network condition controller monitors the condition of the communication network constantly. The electronic information terminal controls the transmission of stroke data and ON-OFF of the local feedback capability based on the condition of the communication network (e.g., disconnection /connection, decrease and increase of quality). Further, the server can change the processing of stroke data received from the electronic information terminal based on the condition of the communication network. A description is given of the image processing system by referring the drawing.

### (Configuration of image processing system)

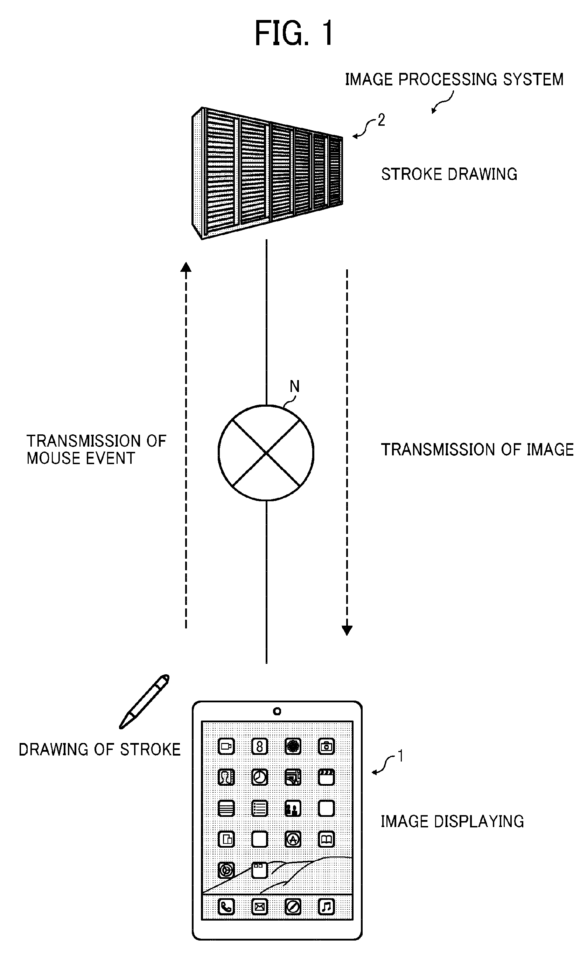

FIG. 1 is a schematic configuration of an image processing system of a first example embodiment. The image processing system includes, for example, an electronic information terminal 1 such as iPad (registered trademark of Apple Inc.) and an electronic information board, a server 2 used as an image processing apparatus, and a communication network "N" used for connecting the electronic information terminal 1 and the server 2 wirelessly or via wires.

The electronic information terminal 1 includes, for example, a touch panel display. When an image such as a stroke is drawn on the electronic information terminal 1 manually such as by hand, a mouse event such as stroke data occurs. Then, the electronic information terminal 1 transmits the mouse event to the server 2. The server 2 includes a stroke drawing application to generate an image corresponding to the stroke data received from the electronic information terminal 1. The server 2 generates an image such as a movie image from the image generated by using the stroke drawing application, and encodes the image with a format, and then transmits the generated encoded image to the electronic information terminal 1. The electronic information terminal 1 displays the image received from the server 2 on the touch panel display.

### (Hardware configuration of electronic information terminal)

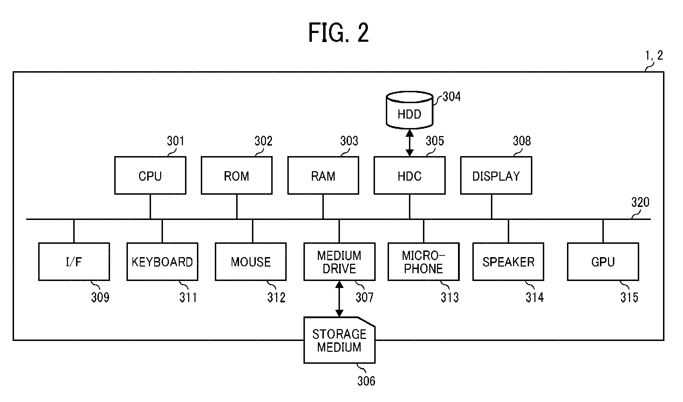

FIG. 2 is an example of a hardware configuration of the electronic information terminal 1 of the first example embodiment. Further, the server 2 can employ a hardware configuration similar to the hardware configuration of the electronic information terminal 1, in which some of the units may be changed or omitted for the server 2 as required. The electronic information terminal 1 includes, for example, a central processing unit (CPU) 301, a read only memory (ROM) 302, and a random access memory (RAM) 303. The CPU 301 controls the terminal as a whole. The ROM 302 stores programs such as initial program loader (IPL) to activate the CPU301. The RAM 303 is used as a working area of the CPU 301. The electronic information terminal 1 further includes, for example, a hard disk drive (HDD) 304, and a hard disk controller (HDC) 305. The HDD304 stores various data such as programs. The HDC 305 controls data reading and data writing of various data to the HDD 304 under the control of the CPU 301. The electronic information terminal 1 further includes, for example, a media drive 307 and a display 308. The media drive 307 controls data reading and data writing to a storage medium 306 such as a flash memory. The display 308 displays various information. The display 308 employs, for a touch panel display. The display 308 can be also used as operation device to operate the electronic information terminal 1.

The electronic information terminal 1 further includes, for example, an interface (I/F) 309, a keyboard 311, a mouse 312, a microphone 313, a speaker 314, a graphics processing unit (GPU) 315 and a bus line 320. The I/F309 is used to communicate data via the communication network "N." The keyboard 311 and the mouse 312 can be used to operate the electronic information terminal 1. The bus line 320 employs, for example, an address bus and data bus to connect the above described units electrically. Programs used for the electronic information terminal 1 and/or the server 2 are installable and executable formatted files, and the programs can be stored and distributed using computer readable storage medium such as the storage medium 306.

### (Functional configuration of electronic information terminal and server)

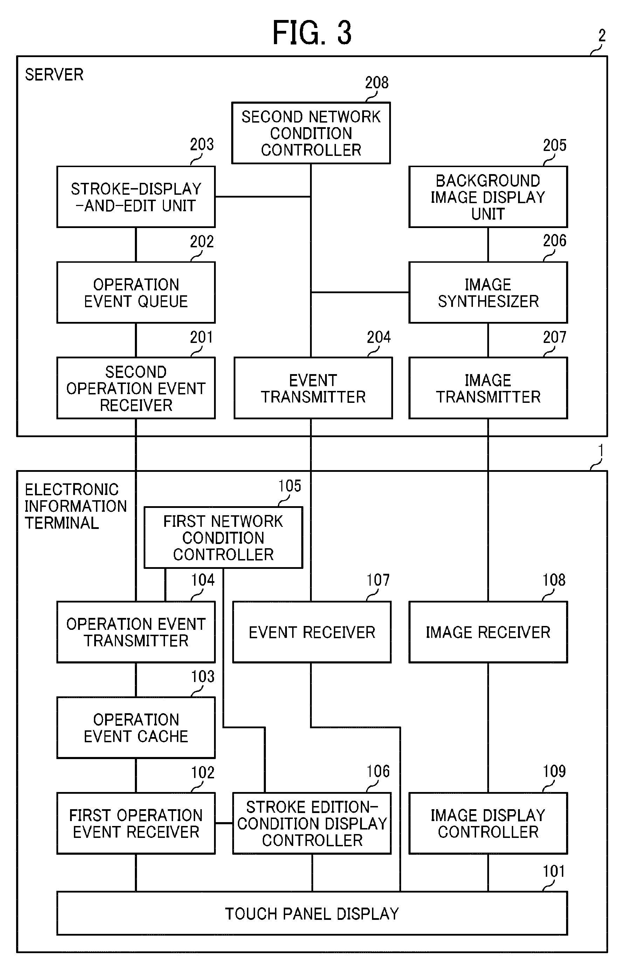

FIG. 3 is a functional block diagram of the electronic information terminal 1 and the server 2 of the first example embodiment. The electronic information terminal 1 includes, for example, a touch panel display 101. The touch panel display 101 corresponding to the display 308 of FIG. 2 can be used as a display and an operation device. The operation to the electronic information terminal 1 can be performed by touching the touch panel display 101 using a hand, a finger, or a device such a touch pen and a mouse. As illustrated in FIG. 3, the electronic information terminal 1 includes, for example, a first operation event receiver 102, an operation event cache 103 useable as a transmission-use memory or first memory, an operation event transmitter 104 useable as a transmitter or transmission unit, and a first network condition controller 105.

The first operation event receiver 102 receives an operation event occurred by an operation to the touch panel display 101. The operation event cache 103 temporarily stores the operation event to be transmitted to the server 2. The operation event transmitter 104 transmits the operation event read out from the operation event cache 103 to the server 2. The first network condition controller 105 controls the condition of the communication network "N." For example, the first network condition controller 105 performs connection processing and disconnection processing to the communication network "N," various information processing related to the network connection with the server 2, and monitors the network condition (connection/ disconnection, quality decease/quality increase).

The electronic information terminal 1 further includes, for example, a stroke edition-condition display controller 106 (operation condition display controller). The stroke edition-condition display controller 106 displays an interface for stroke edition and a condition of being-edited stroke on the touch panel display 101 based on the operation event received from the touch panel display 101. The stroke edition-condition display controller 106 can be referred to a local feedback (LFB), and the stroke edition-condition display controller 106 can be used as an operation condition display controller.

The electronic information terminal 1 further includes, for example, an event receiver 107, an image receiver 108, and an image display controller 109. The event receiver 107 receives an event from a stroke-display-and-edit unit 203 of the server 2 via an event transmitter 204 of the server 2. The image receiver 108 receives an image from the server 2. The image display controller 109 displays the image received by the image receiver 108 on the touch panel display 101. The image receiver 108 is used as an image receiver, and the image display controller 109 is used as an image display controller.

Further, the server 2 includes, for example, a second operation event receiver 201, an operation event queue 202 useable as a reception-use memory or second memory, and a stroke-display-and-edit unit 203 useable as an image data generator. The second operation event receiver 201, used as an event receiver, receives the operation event. The operation event queue 202 temporarily stores operation events using a first-in-first-out memory. The stroke-display-and-edit unit 203 reads out the operation event from the operation event queue 202, and displays and edits stroke.

The server 2 further includes, for example, an event transmitter 204 and a background image display unit 205. The event transmitter 204 transmits an event such as an image switching notice that occurs during the stroke edition to the electronic information terminal 1. The background image display unit 205 displays a background image.

The server 2 further includes, for example, an image synthesizer 206 and an image transmitter 207. The image synthesizer 206 synthesizes the background image and stroke as an image such as a movie image, and encodes the image with a given format to generate the encoded image. The image transmitter 207 transmits the encoded image generated by the image synthesizer 206 to the electronic information terminal 1. The image synthesizer 206 can be used as an image synthesizer, and the image transmitter 207 can be used as an image transmitter.

The server 2 further includes, for example, a second network condition controller 208 that controls the condition of the communication network "N." For example, the second network condition controller 208 performs connection processing and disconnection processing to the communication network "N," various information processing related to the network connection with the electronic information terminal 1, and monitors the network condition (connection/ disconnection, quality decease/quality increase).

### (Basic operation of electronic information terminal and server)

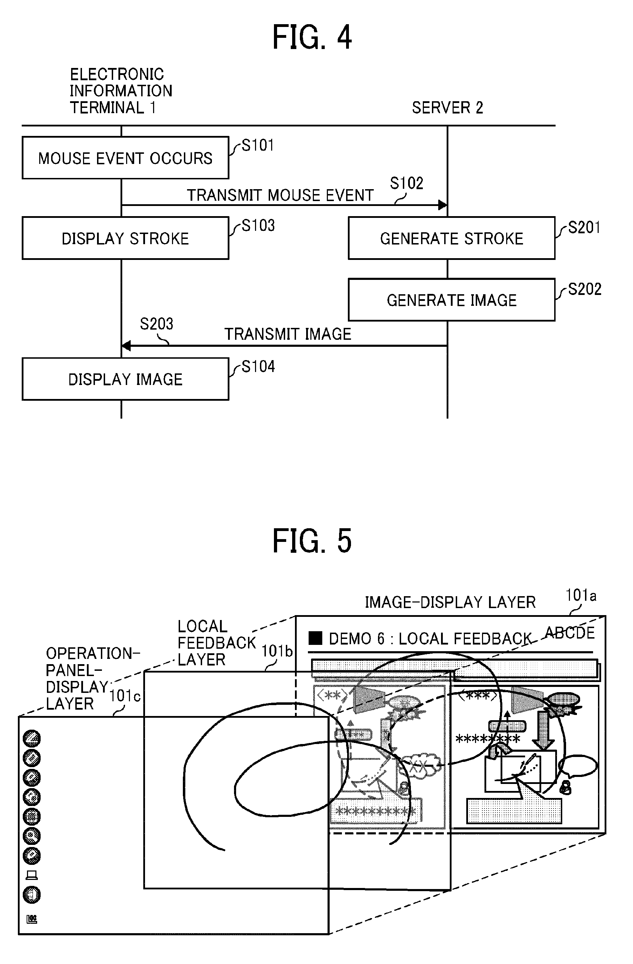

FIG. 4 is a sequential chart illustrating a process of a basic operation by the electronic information terminal 1 and the server 2 of the first example embodiment. Hereinafter, the basic operation is described using a mouse event as an example of the operation event. When a stroke is drawn on the touch panel display 101 of the electronic information terminal 1 by touching the touch panel display 101, a mouse event occurs as the operation event (step S101). Then, the first operation event receiver 102 receives the mouse event from the touch panel display 101, the mouse event can be stored in the operation event cache 103, the operation event transmitter 104 reads out the mouse event from the operation event cache 103, and the operation event transmitter 104 transmits the mouse event to the server 2 (step S102).

Further, the stroke edition-condition display controller 106 receives the mouse event from the first operation event receiver 102, and generates a stroke corresponding to the received mouse event (hereinafter, this generated stroke may be referred to a local feedback (LFB) stroke or a first image) and displays the stroke on the touch panel display 101 (step S103).

At the server 2, the second operation event receiver 201 receives the mouse event from the event transmitter 104, and the stroke-display-and-edit unit 203 uses a stroke drawing application to generate to an image of stroke based on the received mouse event (hereinafter, this generated image may be referred to a second image) (step S201). When the server 2 receives a plurality of the mouse events, the stroke-display-and-edit unit 203 generates the image of stroke based on the sequentially received mouse events.

The image synthesizer 206 synthesizes a background image supplied from the background image display unit 205 and one or more images generated by the stroke drawing application to generate an image such as a movie image, and encodes the image with a given format (step S202). The image transmitter 207 transmits the generated encoded image to the electronic information terminal 1 (step S203).

In the electronic information terminal 1, the image receiver 108 receives the encoded image, and the image display controller 109 decodes the encoded image and displays the image on the touch panel display 101 (step S104). In this description, the movie image may mean a movie image displaying a plurality of images continuously, and the movie image can be encoded by using a format such as H.264. As to the first example embodiment, the movie image transmitted from the server 2 to the electronic information terminal 1 is referred to an image.

### (Layer structure of electronic information terminal)

FIG. 5 illustrates an example of a layer structure of a screen displayable on the electronic information terminal 1. The screen image displayable on the electronic information terminal 1 can be configured with a plurality of layers such as an image-display layer 101a, a local feedback layer 101 and an operation-panel-display layer 101c. The image-display layer 101 a displays an image transmitted from the server 2. The local feedback layer 101b displays an interface for stroke edition and a condition of being-edited stroke. The operation-panel-display layer 101c displays, for example, a list of available commands. The touch panel display 101 of the electronic information terminal 1 displays a screen image that superimposes the image-display layer 101a, the local feedback layer 101 and the operation-panel-display layer 101c.

### (Transmission of image)

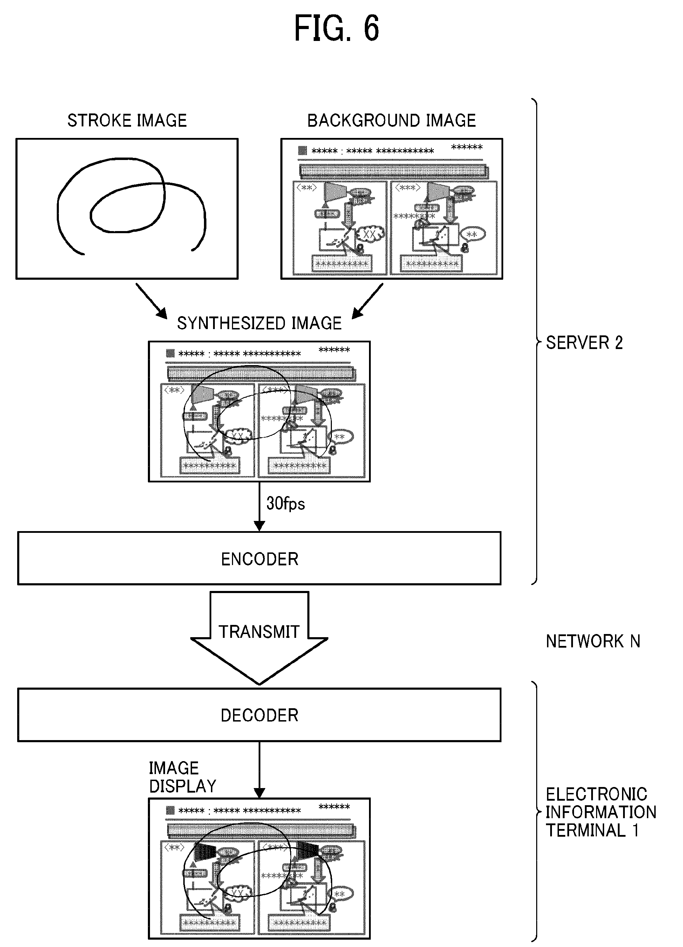

FIG. 6 illustrates a schematic process of transmission of image by the server 2 of the first example embodiment. In the server 2, the image synthesizer 206 synthesizes each stroke generated by the stroke-display-and-edit unit 203, and a background image supplied from the background image display unit 205 to generate an image such as a movie image including one or more synthesized images. Further, the image synthesizer 206 further performs an encoding process to the movie image to encode the movie image with a given format such as H.264 (video compression coding method) and/or MPEG-4 (video compression coding method for portable terminals) to generate image data. The image transmitter 207 transmits the encoded image data to the electronic information terminal 1. In the electronic information terminal 1, the image receiver 108 receives the encoded image data and decodes the encoded image data. The image display controller 109 displays the decoded image data on the touch panel display 101.

### (Data structure of operation event)

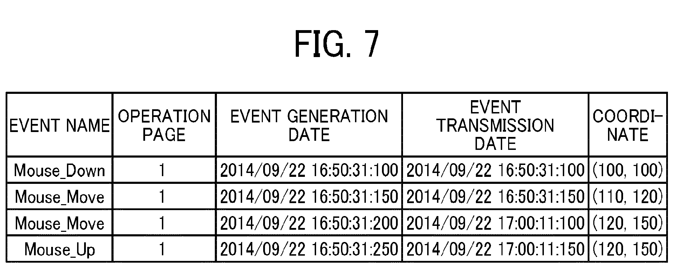

A description is given of data structure of operation events that are communicated between the electronic information terminal 1 and the server 2. Hereinafter, the data structure of the operation event is described using the mouse event as an example of the operation event. FIG. 7 illustrates an example of data structure of the operation events such as mouse events of the first example embodiment. Each of the mouse events includes information of an event name, event generation date, event transmission date to the server 2, coordinates of events, and operated or operation page. The coordinate information of event indicates a coordinate position of event on the touch panel display 101, and the coordinate position of event can be detected by a coordinate sensor of the touch panel display 101. The operation page indicates information of page position processed as an operation target when a background image supplied from the background image display unit 205 of the server 2 (see FIG. 6) is configured with a plurality of pages.

For example, a following case can be assumed. When a mouse event occurs such as a stroke is drawn on page "1" from the electronic information terminal 1a while the electronic information terminal 1a is being disconnected from the communication network "N" and a background image transmitted from the server 2 is changed to the page "2" by the operation at another electronic information terminal 1b. If the electronic information terminal 1a is connected again to the communication network "N" and transmits the mouse event to the server 2, the server 2 can apply the mouse event to the correct operation page because the mouse event includes information of the operation page. Further, instead of the mouse event, Stylus events (Stylus_Down, Stylus_Move, Stylus_Up) can be used.

### (Processing of mouse event when network connection is normal)

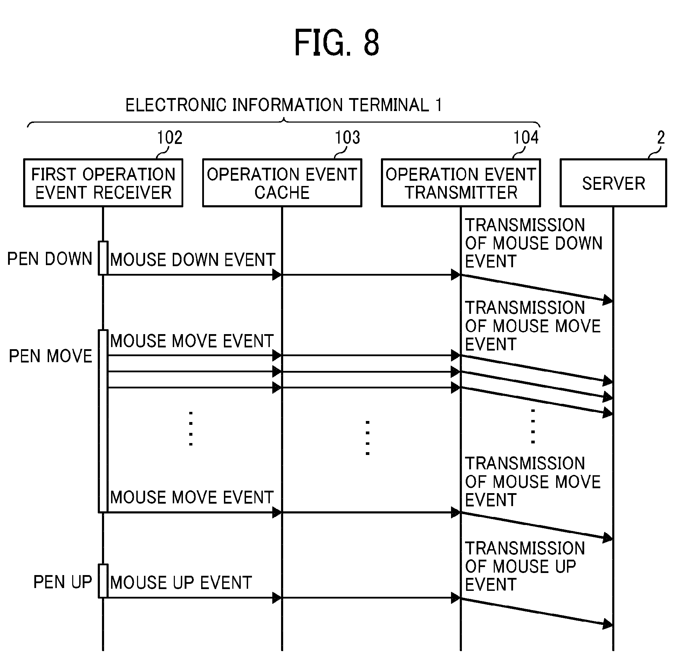

FIG. 8 is a sequential chart illustrating a process of transmission of the mouse events of the first example embodiment. FIG. 8 is an example when the electronic information terminal 1 is connected to the communication network "N" normally. When a stroke is drawn on the touch panel display 101, the mouse event occurs as the operation event. After the mouse event is received by the first operation event receiver 102, the operation event cache 103 temporarily stores the mouse event. When the electronic information terminal 1 and the server 2 are connected via the communication network "N" normally, the operation event transmitter 104 read outs the mouse events sequentially from the operation event cache 103, and transmits the mouse events to the server 2.

When a contact of a touch pen (i.e., pen down) to the touch panel display 101 is detected by the touch panel display 101, the mouse event "MouseDown" occurs. Then, the operation event transmitter 104 transmits the mouse event "MouseDown" to the server 2. When a movement of the touch pen being contacted (i.e., pen move) on the touch panel display 101 is detected by the touch panel display 101, the mouse event "MouseMove" occurs. Then, the operation event transmitter 104 transmits the mouse event "MouseMove" to the server 2. The MouseMove may occur continuously during one stroke drawing operation, and each of the MouseMove is sequentially transmitted to the server 2. When a lifting of the touch pen (i.e., pen up) from the touch panel display 101 is detected by the touch panel display 101, the mouse event "MouseUp" occurs. Then, the operation event transmitter 104 transmits the mouse event "MouseUp" to the server 2.

One stroke drawing operation is started by a pen down and is ended by a pen up. Therefore, the one stroke includes the mouse events "MouseDown, MouseMove and MouseUp." These mouse events can be detected as a string of mouse events. The string of mouse events includes one MouseDown event, at least one MouseMove event, and one MouseUp event. When the string of mouse events are entirely or completely transmitted to the server 2, the operation event transmitter 104 deletes the string of mouse events from the operation event cache 103.

For example, as to the sequentially occurring string of mouse events, each of the one MouseDown event, at least one MouseMove event, and one MouseUp event is temporarily stored in the operation event cache 103 and then transmitted to the server 2 sequentially. When the last mouse event "MouseUp" of the string of mouse events is transmitted to the server 2, the operation event transmitter 104 deletes the string of mouse events such as MouseDown, MouseMove, and MouseUp from the operation event cache 103.

Further, in the server 2, the second operation event receiver 201 receives the mouse events sequentially transmitted from the electronic information terminal 1, and temporarily stores the mouse events in the operation event queue 202. The stroke-display-and-edit unit 203 sequentially reads out the mouse events from the operation event queue 202, and generates stroke image data based on the mouse events.

### (Processing of mouse event when network connection is disconnected: example 1)

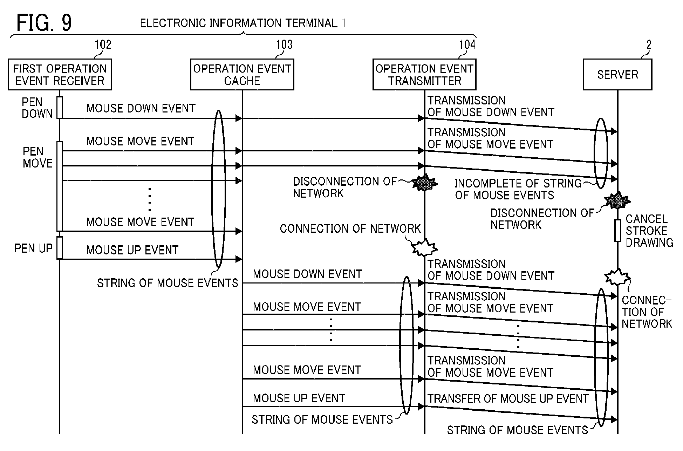

FIG. 9 is another sequential chart illustrating a process of transmission of the mouse events of the first example embodiment. When the electronic information terminal 1 is being disconnected from the communication network "N," the operation event transmitter 104 of the electronic information terminal 1 stores the mouse events in the operation event cache 103, and transmits the string of mouse events stored in the operation event cache 103 to the server 2 again from the first to last mouse events sequentially when the communication network "N" is re-connected with the electronic information terminal 1. When the operation event occurs by an operation to the touch panel display 101, the occurred operation event can be temporarily stored in the operation event cache 103 before the operation event is transmitted to the server 2. Since the condition of the communication network "N" is being monitored by the first network condition controller 105 constantly, the operation of the operation event transmitter 104 can be changed based on the condition of the communication network "N"

When the first network condition controller 105 detects the disconnection with the communication network "N," the operation event transmitter 104 suspends the transmission of the mouse events to the server 2. If the operation to the touch panel display 101 is still continued during the disconnection with the communication network "N," the mouse events occur, and the mouse events are stored sequentially in the operation event cache 103.

For example, when the first network condition controller 105 detects the disconnection with the communication network "N" during the transmission of the string of mouse events, the electronic information terminal 1 and the server 2 can be operated as follows. Specifically, since the operation event transmitter 104 of the electronic information terminal 1 cannot complete the transmission of the string of mouse events to the server 2, the operation event transmitter 104 does not perform a process of deleting the corresponding mouse events from the operation event cache 103.

Further, the stroke edition-condition display controller 106 displays an image based on the operation event received from the first operation event receiver 102 on the touch panel display 101, in which the operation event is generated on the electronic information terminal 1 but the operation event is no generated or reproduced on the server 2.

Further, in the server 2, when the second network condition controller 208 detects the disconnection with the communication network "N," the stroke-display-and-edit unit 203 deletes the incompletely received string of mouse events from the operation event queue 202, and image data is not generated for the incompletely received string of mouse events deleted by the stroke-display-and-edit unit 203. The incompletely received string of mouse events means that at least a part of a plurality of mouse events, which are used to generate one image such as stroke, is not transmitted to the server 2 due to the disconnection with the communication network "N," and thereby the server 2 does not receive the complete set of the string of mouse events.

Then, when the first network condition controller 105 of the electronic information terminal 1 detects the connection with the communication network "N" again, the operation event transmitter 104 sequentially reads out the operation events from the operation event cache 103 and transmits the operation events to the server 2. In this case, the operation event transmitter 104 reads out the string of the operation events from the first (MouseDown event) to last mouse events sequentially, and transmits the string of the operation events to the server 2. With employing this configuration, after the electronic information terminal 1 is connected with the communication network "N" again, the string of the operation events are completely transmitted to the server 2, and thereby a stroke image drawn by the stroke-display-and-edit unit 203 of the server 2 can be performed completely. After the string of the operation events is entirely or completely transmitted to the server 2, the operation event transmitter 104 deletes the string of the operation events from the operation event cache 103.

Further, in the server 2, the second operation event receiver 201 receives the mouse events transmitted from the electronic information terminal 1, and temporarily stores the mouse events in the operation event queue 202. The stroke-display-and-edit unit 203 sequentially reads out the mouse events from the operation event queue 202, and generates stroke image data based on the mouse events.

### (Operation of event transmission)

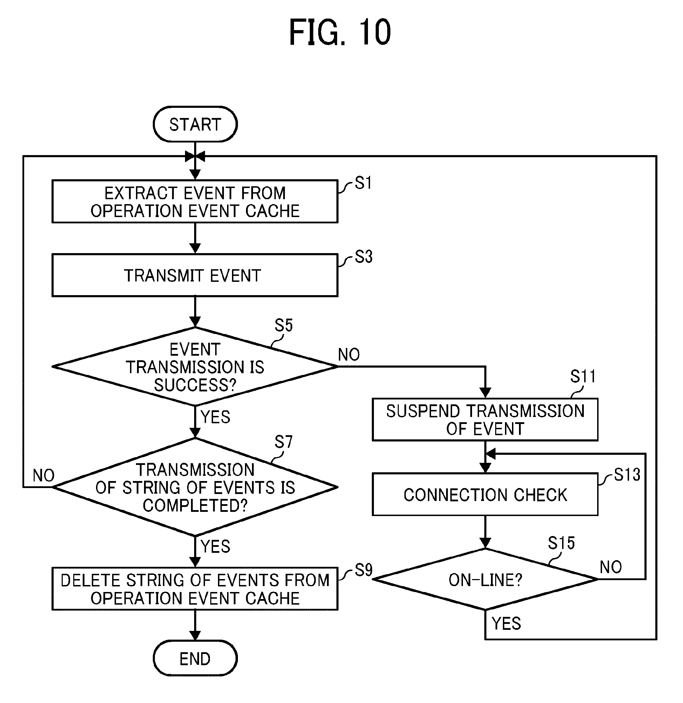

A description is given of an operation of the operation event transmitter 104 and the first network condition controller 105 of the electronic information terminal 1. FIG. 10 is a flow chart showing the steps of a process of transmitting the mouse events from the electronic information terminal 1 of the first example embodiment. Hereinafter, the communication protocol employs transmission control protocol/internet protocol (TCP/IP).

At step S1, the operation event transmitter 104 extracts one mouse event from the operation event cache 103, in which the operation event transmitter 104 generates a copy of the mouse event of a transmission target from the mouse events stored in the operation event cache 103. At step S3, the operation event transmitter 104 transmits the mouse event extracted from the operation event cache 103 to the server 2. At step S5, the first network condition controller 105 checks whether a transmission of the mouse event has completed successfully each time the operation event transmitter 104 transmits the mouse event. Specifically, the first network condition controller 105 checks whether a packet including a normal confirmation response "ACK (acknowledge)" is returned from the server 2 within a given time period after the operation event transmitter 104 transmits the mouse event data to the server 2.

If the normal confirmation response "ACK" is received within the given within the given time period, the first network condition controller 105 determines that the transmission of the operation events has completed successfully (step S5: YES), and the sequence proceeds to step S7. At step S7, the operation event transmitter 104 checks whether the string of the operation events is completely transmitted.

If an operation event not-yet-transmitted exists in the string of the operation events (step S7: NO), the sequence returns to step S1. If the string of the operation events are completely transmitted (step S7: YES), the operation event transmitter 104 deletes the string of the operation events from the operation event cache 103 (step S9). If a to-be-transmitted new string of operation events exists, the sequence returns to step S1 and the subsequent steps are performed again.

If the normal confirmation response "ACK" is not received from the server 2 within the given time period and then the timeout occurs, the first network condition controller 105 determines that the transmission of the operation events has failed (step S5: NO), and then the sequence proceeds to step S11. At step S11, the operation event transmitter 104 suspends the transmission of the operation events. At step S13, the first network condition controller 105 check the connection with the server 2. Specifically, the first network condition controller 105 transmits a "SYN" packet having a SYN (synchronize) flag of 1 requesting the connection to the server 2. At step S15, the first network condition controller 105 checks whether a SYN/ACK packet having the SYN flag of "1" and ACK of flag "1" is returned from the server 2 within the given time period.

If the SYN/ACK packet is not returned from the server 2 within the time period and then the timeout occurs (step S15: NO), the first network condition controller 105 performs step S13 periodically. If the SYN/ACK packet is returned from the server 2within the given time period (step S15: YES), the sequence returns to step S1 and the subsequent steps are performed. When the communication network "N" is re-connected, at step S1, the operation event transmitter 104 re-transmits the string of mouse events starting from the first (MouseDown event) to last mouse events sequentially to the server 2.

### (Page edition: example 1)

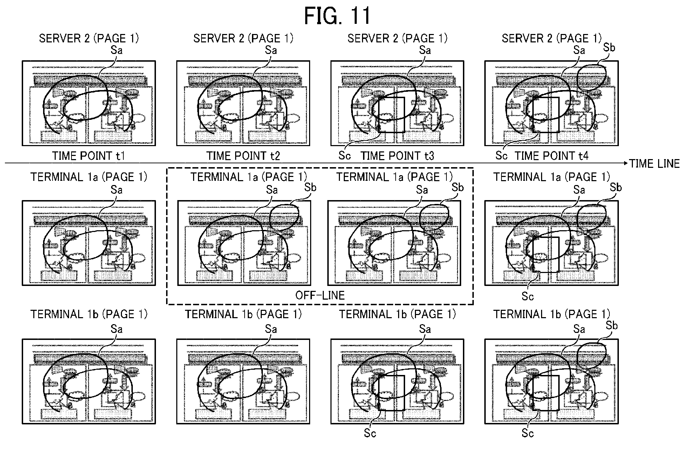

A description is given of an example of image processing in the image processing system of the first example embodiment. FIG. 11 schematically illustrates an image processing when the network connection between the electronic information terminal 1 and the server 2 is disconnected. In FIG. 11, the image processing system includes one server 2, and two electronic information terminals 1a and 1b. FIG. 11 illustrates an example case that a stroke is drawn on the touch panel display 101 of the electronic information terminal 1a (one terminal or first terminal), and the stroke data is reproduced on the touch panel display 101 of the electronic information terminal 1b (another terminal or first terminal) via the server 2.

At the time point "t1," since the server 2 and the two electronic information terminals 1a and 1b are connected to the communication network "N" normally, the screens of the server 2 and the two electronic information terminals 1a and 1b are-synchronized one to another, in which a stroke Sa is drawn on an image of the page "1" used as a background image.

Then, it is assumed that the electronic information terminal 1a alone is disconnected from the communication network "N" at the time point "t2" and becomes an off-line condition, in which a new stroke Sb can be drawn on the electronic information terminal 1a, but the stroke Sb is not reproduced on the server 2 and the electronic information terminal 1b because the electronic information terminal 1a is at the off-line condition.

Then, it is assumed that a new stroke Sc is drawn on the electronic information terminal 1b at the time point "t3," and data of the stroke Sc is transmitted to the server 2, in which the screens of the server 2 and the electronic information terminal 1b are synchronized one to another, but the stroke Sc is not reproduced on the screen of the electronic information terminal 1a that is at the off-line condition.

Then, it is assumed that the network connection of electronic information terminal 1a is resumed at the time point "t4," with which the stroke Sb can be transmitted from the electronic information terminal 1a to the server 2. Then, the server 2 transmits an image drawn with the stroke Sa, the stroke Sc and the stroke Sb to the two electronic information terminals 1a and 1b, in which the screens of the server 2 and the two electronic information terminals 1a and 1b are synchronized one to another, and the strokes Sa, Sb and Sc are drawn on the screens of the server 2 and the two electronic information terminals 1a and 1b.

### (Page edition: example 2)

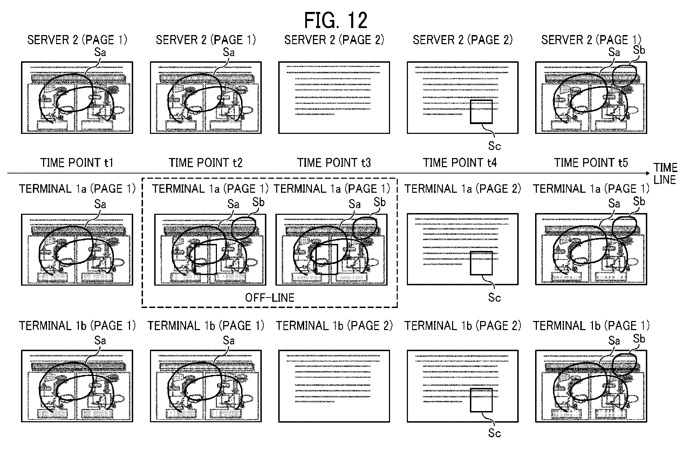

FIG. 12 schematically illustrates another image processing when the network connection between the electronic information terminal 1 and the server 2 is disconnected. FIG. 12 schematically illustrates an image processing when the electronic information terminal 1 switches or changes a display-use page while the communication network "N" is being disconnected.

At the time point "t1," since the server 2 and the two electronic information terminals 1a and 1b are connected to the communication network "N" normally, the screens of the server 2 and the two electronic information terminals 1a and 1b are synchronized one to another, in which a stroke Sa is drawn on an image of the page "1" used as a background image.

Then, it is assumed that the electronic information terminal 1a alone is disconnected from the communication network "N" at the time point "t2" and becomes an off-line condition, in which a new stroke Sb can be drawn on the electronic information terminal 1a, but the stroke Sb is not reproduced on the server 2 and the electronic information terminal 1b because the electronic information terminal 1a is at the off-line condition.

At the time point "t3," it is assumed that the an event to switch the display-use page from page "1" to page "2" occurs at the electronic information terminal 1b, and this event is transmitted to the server 2. Then, the server 2 generates an image displaying the page "2" based on the event received from the electronic information terminal 1b, and transmits an image to each of the two electronic information terminals 1a and 1b. Since the electronic information terminal 1b is at an on-line condition, the electronic information terminal 1b receives the image, and the screen of the server 2 and the screen of electronic information terminal 1b are synchronized one to another, but since the electronic information terminal 1a at the off-line condition, the display switching to the page "2" is not reproduced on the screen of the electronic information terminal 1a.

At the time point "t4," when the network connection of electronic information terminal 1a is resumed, since the electronic information terminal 1a can receive the page "2" transmitted from the image from the server 2, the page "2" can be displayed on the touch panel display 101 of the electronic information terminal 1a. Further, if the stroke Sc is drawn on the electronic information terminal 1b, the stroke data of stroke Sc is reproduced on the page "2" by the server 2,and the screens of the server 2 and the two electronic information terminals 1a and 1b are synchronized one to another.

Further, at the time point "t4," the electronic information terminal 1a can transmit data of the stroke Sb drawn on the page "1" at the time point "t2" to the server 2, in which the server 2 generates image data including the data of the stroke Sb drawn on the page "1" by the electronic information terminal 1a. However, since the screen is displaying the page "2" at the time point "t4," the data of the stroke Sb is not reproduced the screen visually at the time point "t4."

At the time point "t5," it is assumed that an event to switch the display-use page from the page "2" to the page "1" occurs at any one of the two electronic information terminals 1a and 1b, and this event is transited to the server 2. Then, the server 2 generates an image displaying the page "1" based on the event, and transmits the image to each of the electronic information terminals 1a and 1b. At this time point "t5," the server 2 generates the image including the stroke Sb transmitted from the electronic information terminal 1a at the time point "t4," and thereby the stroke Sb is displayed on the two electronic information terminals 1a and 1b.

### (ON-OFF control of local feedback capability)

As above described, the electronic information terminal 1 of the first example embodiment has the local feedback (LFB) capability. Therefore, even if the electronic information terminal 1 is disconnected from the communication network "N," various operation events such as mouse events drawn on the electronic information terminal 1 can be displayed on the touch panel display. However, it may be useful to set the LFB capability at OFF to reduce the processing load of the electronic information terminal 1 when the LFB capability is not required. Therefore, as to the first example embodiment, it is configured to measure a network delay periodically, and the LFB capability is deactivated (e.g., stopped) when the network delay is too small while if the network delay becomes too great, the LFB capability is activated.

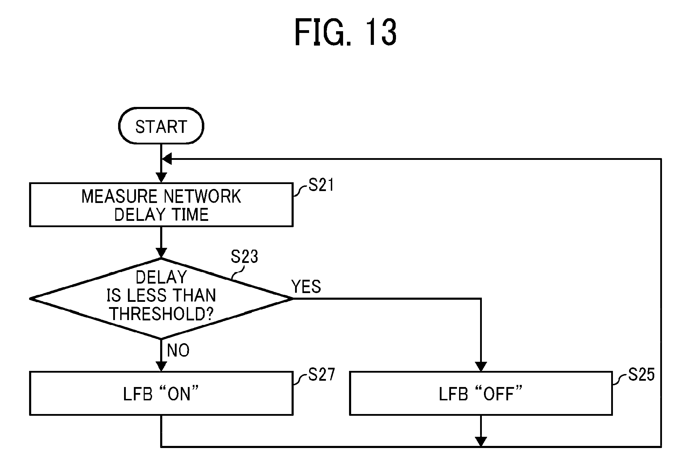

A description is given of ON-OFF control of LFB capability with reference to FIG. 13. FIG. 13 is a flow chart showing the steps of a process of ON-OFF control of LFB capability.

At step S21, the first network condition controller 105 measures a round trip time RTT as the network delay time. Specifically, the first network condition controller 105 transmit a request of data transfer to the server 2, and measures a return time to receive a reply from the server 2. At step S23, the first network condition controller 105 checks whether the round trip time RTT (i.e., network delay time) is less than a given threshold. If the round trip time RTT is less than the given threshold (i.e., network delay is small) (step S23: YES), the first network condition controller 105 transmits a command signal to deactivate the operation to the stroke edition-condition display controller 106 to set the LFB capability at OFF (step S25).

If the round trip time RTT is the given threshold or more (i.e., network delay is great) (step S23: NO), the first network condition controller 105 transmits a command signal to activate the operation to the stroke edition-condition display controller 106 to set the LFB capability ON (step S27). The first network condition controller 105 can measure the round trip time RTT for the communication network "N" periodically.

As to the first example embodiment, when the network delay time is too small, the LFB capability is deactivated (i.e., OFF), and thereby the processing load of the electronic information terminal 1 can be reduced. By contrast, if the network delay time is too great, the LFB capability is activated (i.e., ON), and thereby the usability can be enhanced.

### (Processing of mouse event when network connection is disconnected: example 2)

A description is given of another processing of the mouse events by the server 2 when the network connection is disconnected with reference to FIG. 9. As to the first example embodiment, when the second network condition controller 208 detects the disconnection of the communication network "N," the image data is not generated because the received string of mouse events is incomplete. However, when the second network condition controller 208 detects the disconnection of the communication network "N," the stroke-display-and-edit unit 203 can be configured to generate image data based on the already received mouse events, which a part of string of mouse events received incompletely. With employing this processing, the stroke data just before the electronic information terminal 1 is disconnected from the communication network "N" can be reproduced as the image data.

### (Second example embodiment)

A description is given of the image processing system of a second example embodiment, in which the configuration same or similar to the configuration of the first example embodiment may be omitted.

A description is given of issues of conventional arts. For example, a conventional transmission system can delete a stroke temporarily displayed on a display when a given time elapses as disclosed in JP-2015-056844-A. However, when a plurality of pages is retained, and an application image that can write a stroke is transmitted for each of the pages, the stroke temporarily displayed on the display of the electronic information terminal 1 cannot be deleted when the page switching occurs.

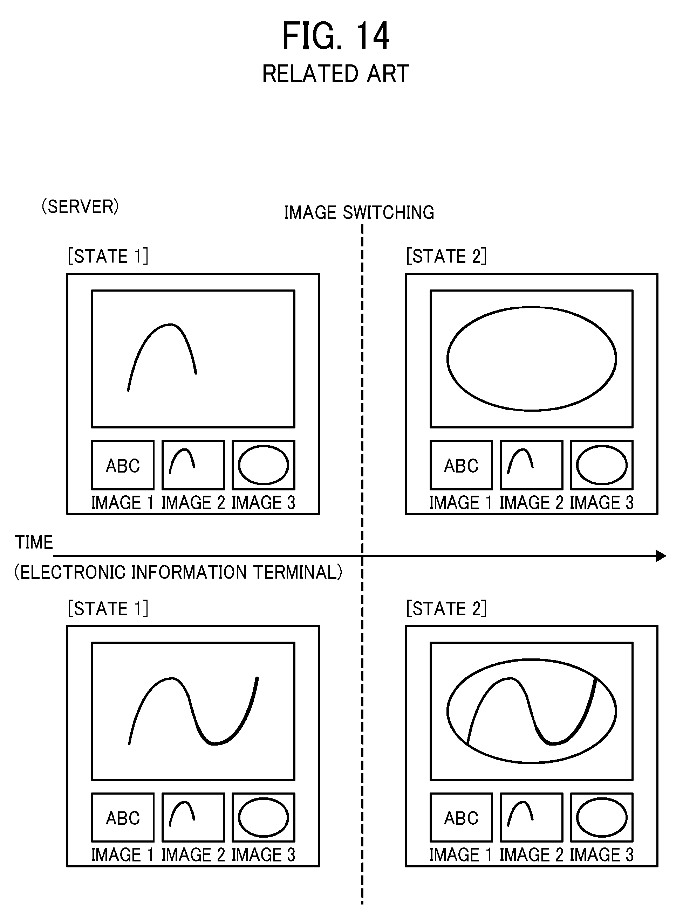

FIG. 14 illustrates this situation of conventional arts. In a case of FIG. 14, it is assumed that time proceeds from the left to right, the image processing at of the server is illustrated at the upper part of FIG. 14, and the image displaying at the electronic information terminal is illustrated at the lower part of FIG. 14. In this example case, it is assumed that the server receives a page switching request from another electronic information terminal, and then the server 2 switches the image displaying from the state 1 to the state 2 as indicated by a dot line.

Specifically, at first, the server displays an image 2 at the state 1, and transmits the image 2 to one electronic information terminal used as a transmission destination, and the electronic information terminal 1 also displays the image 2. If a user (first user) of the electronic information terminal inputs a stroke when the image 2 is being displayed, the stroke is temporarily displayed on the screen of the electronic information terminal, which means this stroke is temporarily drawn on a LFB layer, in which the stroke is drawn from one of the curved line displayed as the image 2.

If another user (second user) of another electronic information terminal requests the image switching to the server 2 under this situation, the image switching occurs. Specifically, the server switches the image displaying from the image 2 to the image 3 as indicated in the state 2 in the upper part of the FIG. 14. In this case, the server transmits the image 3 to the electronic information terminal of the first user, and then the image 3 is displayed on the screen of the electronic information terminal of the first user that has received the image 3, in which the image 3 is drawn on the image-display layer 101 a of the electronic information terminal of the first user.

The temporarily-displayed stroke is displayed on the LFB layer 101b different from the image-display layer 101a in the electronic information terminal of the first user. Therefore, when the electronic information terminal of the first user becomes the state 2, the image 3 drawn on the image-display layer 101a and the stroke temporarily-displayed on the LFB layer 101 bare superimposed with each other, and thereby a screen image that combines the stroke image drawn the image 2, and the image 3 may be displayed.

Therefore, the image processing system of the second example embodiment can be configured as follows. For example, as illustrated in FIG. 12, when the image transmitted from the server 2 is changed from the page "1" to the page "2" by operating another electronic information terminal 1b, the server 2 transmits an image switching notice to all of the electronic information terminals 1 including the electronic information terminal 1a. When the electronic information terminal 1 receives the image switching notice, the LFB stroke drawn as the first image on the electronic information terminal 1 is deleted.

### (Image switching operation and image switching notice)

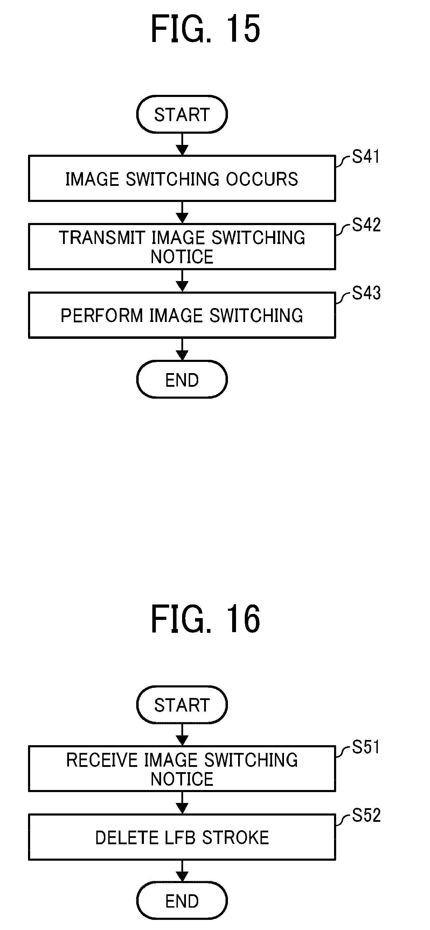

A description is given of image switching operation with reference to a functional block diagram of FIG. 3, the image switching example of FIG. 14, and FIG. 15.

At first, when the server 2 receives an image switching request from another electronic information terminal 1 such as electronic information terminal 1b, the background image display unit 205 used as the background image switching unit switches the screen from the page "2" to the page "3" (step S41). The "background image" is an image displayed on one layer different from a layer displaying the second image (e.g., stroke). For example, the "background image" displayed on one layer under the layer displaying the second image (e.g., stroke).

Then, the server 2 transmits the image switching notice to all of the electronic information terminals 1 via the event transmitter 204 (step S42). After transmitting the image switching notice, the background image display unit 205 of the server 2 performs a switching operation of the background image (step S43).

### (Deletion of LFB stroke)

A description is given of a process of deleting LFB stroke at the electronic information terminal 1 with reference to FIG. 16. When the event receiver 107 of the electronic information terminal 1 receives the image switching notice (step S51), the stroke edition-condition display controller 106 deletes the LFB stroke (step S52).

As to the second example embodiment, even if a plurality of pages is retained and an application image that can write a stroke is transmitted for each of the pages, unintended image display at the electronic information terminal 1 can be prevented. For example, when the background image is switched from a first background image to a second background image, the stroke temporarily drawn on the first background image displayed on the electronic information terminal 1 before the image switching and the second background image displayed on the electronic information terminal 1 after the image switching are not mixed at the electronic information terminal 1, and thereby the stroke temporarily drawn on the first background image are not displayed with the second background image.

The above described example embodiments can be devised as the following configurations.

### (First configuration)

As to the first configuration, the electronic information terminal 1 is connectable with the image processing apparatus such as server 2 via the communication network N. The electronic information terminal 1 includes, for example, the display such as the touch panel display 101, the first memory such as the transmission-use memory (operation event cache 103) to temporarily store stroke data generated by an operation event such as mouse event to the display, the first network condition controller 105 to detect a condition of the communication network N, and the transmitter such as the operation event transmitter 104 to read out the stroke data from the first memory and to transmit the stroke data to the image processing apparatus via the communication network N based on the condition of the communication network N detected by the first network condition controller 105.

In this configuration, the transmitter reads out the stroke data from the first memory and to transmit the stroke data to the image processing apparatus based on the condition of the communication network N detected by the first network condition controller 105. Therefore, the data vanishing such as partial data loss of stroke data can be avoided. As to The above described example embodiments, the mouse events for drawing the image are used as an example of the stroke data, but not limited hereto. For example, the stroke data that is used to erase a part or entire of drawn image can be used.

### (Second configuration)

As to the second configuration, the electronic information terminal 1 includes, for example the operation condition display controller such as the stroke edition-condition display controller 106 to display the first image, generated from the stroke data, on the display such as the touch panel display 101.

If the electronic information terminal 1 uses an external image processing apparatus to perform the image processing of the stroke data, and then receives the second image generated by the external image processing apparatus and displays the second image on the electronic information terminal 1, the display of the second image may be delayed due to the network delay. As to the second configuration, the operation condition display controller can perform the local feedback (LFB) processing that generates the first image from the stroke data and displays the first image on the touch panel display 101. Therefore, the electronic information terminal 1 can display the image to a user without delaying the image displaying timing.

### (Third configuration)

As to the third configuration, the electronic information terminal 1 includes, for example, the image receiver 108 that receives the image generated from the stroke data by the image processing apparatus such as the server 2 via the communication network "N," and the image display controller 109 that superimposes the image received from the image processing apparatus on the first image, and displays the superimposed image.

With this configuration, the electronic information terminal 1 can receive and display the image including the second image generated by the image processing apparatus, and the first image generated by the operation condition display controller can be superimposed with the image generated by the image processing apparatus, and the superimposed image can be displayed. Therefore, the electronic information terminal 1 can display the image to a user without causing uncomfortableness.

### (Fourth configuration)

As to the fourth configuration of the electronic information terminal 1, the first network condition controller 105 further measures a communication network delay time, and determines whether the measured communication network delay time is equal to or greater than a given threshold. When the measured communication network delay time is equal to or greater than the given threshold, the operation condition display controller (stroke edition-condition display controller 106) displays the first image on the display such as the touch panel display 101, and when the measured communication network delay time is less than the given threshold, the operation condition display controller (stroke edition-condition display controller 106) stops a display of the first image on the display such as the touch panel display 101. The operation condition display controller can perform the LFB processing that generates the first image and displays the first image on the touch panel display 101, with which the first image based on the stroke data can be displayed real time even if the network delay is greater. However, the LFB processing increases the processing load of the electronic information terminal 1. As to the fourth configuration, the operation condition display controller deactivates (e.g., stops) the displaying of the first image when the network delay is small, with which the processing load of the electronic information terminal 1 can be reduced.

### (Fifth configuration)

As to the fifth configuration of the electronic information terminal 1, when the first network condition controller 105 detects the disconnection with the communication network "N" while the transmitter such as the operation event transmitter 104 is transmitting the string of stroke data, and then the first network condition controller 105 detects the re-connection with the communication network "N." The transmitter transmits the string of stroke data from the first to last, which were transmitted when the disconnection with the communication network "N" occurred, to the image processing apparatus such as the server 2. The transmitter reads out the string of stroke data from the transmission-use memory and transmits the string of stroke data when the re-connection with the communication network "N" occurs. Therefore, the string of stroke data can be transmitted completely even if the electronic information terminal 1 is disconnected from the communication network "N" while the string of stroke data is being transmitted.

### (Sixth configuration)

As to the sixth configuration of the electronic information terminal 1, after the transmitter such as the operation event transmitter 104 transmits the string of stroke data to the image processing apparatus such as the server 2, the transmitter deletes the string of stroke data from the transmission-use memory such as the operation event cache 103. In this configuration, the transmission-use memory stores the string of stroke data until the transmission of the string of stroke data is completed. Therefore, the string of stroke data can be transmitted completely even if the electronic information terminal 1 is disconnected from the communication network "N" while the string of stroke data is being transmitted.

### (Seventh configuration)

As to the seventh configuration, the image processing apparatus such as the server 2 connectable with the electronic information terminal 1 via the communication network N includes, for example, the reception-use memory such as the operation event queue 202 to temporarily store stroke data sequentially received from the electronic information terminal 1, and the second image generator such as the stroke-display-and-edit unit 203 to generate the second image based on the string of stroke data stored in the second memory. The second image generator 203 generates the second image when the string of stroke data is completely stored in the second memory such as the reception-use memory 202. In this configuration, the second image generator generates the second image after the string of stroke data is completely received. Therefore, the data vanishing such as partial data loss of stroke data can be avoided, and the second image can be drawn completely based on the string of stroke data.

### (Eighth configuration)

As to the eighth configuration, the image processing apparatus such as the server 2 includes, for example, the second network condition controller 208 that controls the condition of the communication network "N." When the second network condition controller 208 detects the disconnection with the communication network "N" while the string of stroke data is being received, the second image generator such as the stroke-display-and-edit unit 203 deletes the incompletely received string of stroke data from the reception-use memory such as the operation event queue 202. In this configuration, the second image generator can delete the incompletely received string of stroke data from the reception-use memory. Therefore, the second image generator can receive the string of stroke data completely when the string of stroke data is transmitted again.

### (Ninth configuration)

As to the ninth configuration, the image processing apparatus such as the server 2 includes, for example, the second network condition controller 208 that controls the condition of the communication network "N." When the second network condition controller 208 detects the disconnection with the communication network "N" while the string of stroke data is being received, the second image generator such as the stroke-display-and-edit unit 203 generates the second image based on the string of stroke data incompletely stored in the reception-use memory such as the operation event queue 202. In this configuration, the stroke data just before the electronic information terminal 1 is disconnected from the communication network "N" can be reproduced as the second image at the image processing apparatus.

### (Tenth configuration)

As to the tenth configuration, the image processing system includes, for example, the electronic information terminal 1 and the image processing apparatus such as the server 2 connectable with the electronic information terminal 1 via the communication network "N."

The electronic information terminal 1 includes, for example, the display such as the touch panel display 101, the transmission-use memory such as the operation event cache 103 (first memory) to temporarily store stroke data generated by an operation event such as the mouse event to the display such as the touch panel display 101, the first network condition controller 105 to detect a condition of the communication network "N," the transmitter such as the operation event transmitter 104 to read out the stroke data from the transmission-use memory and to transmit the stroke data to the image processing apparatus via the communication network "N" based on the condition of the communication network "N" detected by the first network condition controller (105), the operation condition display controller such as the stroke edition-condition display controller 106 to display the first image, generated from the stroke data, on the display, the image display controller 109 to display an image received from the image processing apparatus a layer different from a layer displaying the first image, in which the image received from the image processing apparatus is displayed on the layer under the layer displaying the first image.

The image processing apparatus includes, for example, the reception-use memory such as the operation event queue 202 to temporarily store stroke data sequentially received from the electronic information terminal 1 via the communication network "N" as a string of stroke data; the second image generator such as the stroke-display-and-edit unit 203 to generate the second image based on the string of stroke data stored in the reception-use memory such as the operation event queue 202 (second memory), the image synthesizer 206 to synthesize the second image displayed on a layer and a background image to be displayed on a layer, different from the layer displaying the second image, as a synthesized image, in which the background image is displayed on the layer under the layer displaying the second image, the display unit such as the background image display unit 205 to display the synthesized image generated by the image synthesizer 206 or the background image, the image transmitter 207 to transmit the synthesized image or the background image displayed by the display unit to the electronic information terminal 1, the background image switching unit such as the background image display unit 205 to switch the background image displayed by the display unit 205 to another background image, and the event transmitter 204 to transmit an image switching notice to the electronic information terminal 1 when the background image switching unit switches the background image displayed by the display unit to the another background image.

The operation condition display controller deletes the first image when the electronic information terminal 1 receives the image switching notice from the image processing apparatus. As to the tenth configuration, when the background image is switched from a first background image to a second background image (i.e., page switching), the stroke temporarily drawn on the first background image displayed on the electronic information terminal 1 before the image switching and the second background image displayed on the electronic information terminal 1 after the image switching are not mixed at the electronic information terminal 1, and thereby the stroke temporarily drawn on the first background image are not displayed with the second background image.

### (Eleventh configuration)

As t the eleventh configuration, the electronic information terminal 1 is connectable with the image processing apparatus such as server 2 via the communication network N. The electronic information terminal 1 includes, for example, the display such as the touch panel display 101, the transmission-use memory such as the operation event cache 103 (first memory) to temporarily store stroke data generated by an operation event such as mouse event to the display, the first network condition controller 105 to detect a condition of the communication network N, the transmitter such as the operation event transmitter 104 to read out the stroke data from the first memory and to transmit the stroke data to the image processing apparatus via the communication network N based on the condition of the communication network N detected by the first network condition controller 105, the operation condition display controller such as the stroke edition-condition display controller 106 to display the first image, generated from the stroke data, on the display, and the image display controller 109 to display an image received from the image processing apparatus on a layer different from a layer displaying the first image, in which the image received from the image processing apparatus is displayed on the layer under the layer displaying the first image.

The operation condition display controller deletes the first image when the operation condition display controller receives an image switching notice, from the image processing apparatus, that indicates that a background image displayed on a layer different from a layer displaying a second image generated from the stroke data transmitted from the transmitter and displayed by the display unit of the image processing apparatus is switched to another background image.

As to the eleventh configuration, when the background image is switched from a first background image to a second background image (i.e., page switching), the stroke temporarily drawn on the first background image displayed on the electronic information terminal 1 before the image switching and the second background image displayed on the electronic information terminal 1 after the image switching are not mixed at the electronic information terminal 1, and thereby the stroke temporarily drawn on the first background image are not displayed with the second background image.

### (Twelfth configuration)

As to the twelfth configuration, the image processing system includes the electronic information terminal 1 of any of the above configurations and the image processing apparatus such as the server 2 of any of the above configurations. As to the twelfth configuration, the effect of the electronic information terminal 1 of any of the above configurations and the image processing apparatus such as the server 2 of any of the above configurations can be attained.

As to the above described example embodiments, even if the electronic information terminal is disconnected from the communication network when stroke data is being transmitted, the data vanishing such as partial data loss of stroke data can be avoided. Further, the above described example embodiments can be applied to the image processing apparatus that processes the transmission stroke data, and the image processing system including the electronic information terminal and the image processing apparatus. As to the above described example embodiments, since the transmitter reads out the stroke data from the transmission-use memory and then transmits the stroke data based on the condition of the communication network detected by the network condition controller, the data vanishing such as partial data loss of stroke data can be avoided.

As described above, the present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. An electronic information terminal (1) connectable with an image processing apparatus (2) via a communication network (N), the electronic information terminal (1) comprising:
a display (101);
a first memory (103) to temporarily store stroke data generated by an operation event to the display (101);
a first network condition controller (105) to detect a condition of the communication network (N); and
a transmitter (104) to read out the stroke data from the first memory (103) and to transmit the stroke data to the image processing apparatus (2) via the communication network (N) based on the condition of the communication network (N) detected by the first network condition controller (105).

2. The electronic information terminal (1) of claim 1, further comprising:
an operation condition display controller (106) to display a first image, generated from the stroke data, on the display (101).

3. The electronic information terminal (1) of claim 2, wherein
the first network condition controller (105) further measures a communication network delay time, and determines whether the measured communication network delay time is equal to or greater than a given threshold, and
when the measured communication network delay time is equal to or greater than the given threshold, the operation condition display controller (106) displays the first image on the display (101),
when the measured communication network delay time is less than the given threshold, the operation condition display controller (106) stops a display of the first image on the display (101).

4. The electronic information terminal (1) of any one of claims 1 to 3, wherein
the stroke data is generated as a string of stroke data including a plurality of sequential data, and
the transmitter (104) deletes the string of stroke data from the first memory (103) after the transmitter (104) transmits the string of stroke data to the image processing apparatus (2).

5. An image processing apparatus (2) connectable with an electronic information terminal (1) via a communication network (N), the image processing apparatus (2) comprising:
a second memory (202) to temporarily store stroke data sequentially received from the electronic information terminal (1) via the communication network (N) as a string of stroke data; and
a second image generator (203) to generate a second image based on the string of stroke data stored in the second memory (202),
wherein the second image generator (203) generates the second image when the string of stroke data is stored in the second memory (202).

6. The image processing apparatus (2) of claim 5, further comprising:
a second network condition controller (208) to detect a condition of the communication network (N),
wherein when the second network condition controller (208) detects a disconnection with the communication network (N) while the image processing apparatus (2) is receiving the string of stroke data from the electronic information terminal (1), the second memory (202) stores the string of stroke data incompletely, and the second image generator (203) deletes the incompletely-received string of stroke data from the second memory (202).

7. The image processing apparatus (2) of claim 5, further comprising:
a second network condition controller (208) to detect a condition of the communication network (N),
wherein when the second network condition controller (208) detects a disconnection with the communication network (N) while the image processing apparatus (2) is receiving the string of stroke data from the electronic information terminal (1), the second memory (202) stores the string of stroke data incompletely, and the second image generator (203) generates the second image based on the incompletely-received string of stroke data stored in the second memory (202).

8. An image processing system comprising:
an electronic information terminal (1); and
an image processing apparatus (2) connectable with the electronic information terminal (1) via a communication network (N),
the electronic information terminal (1) including:
a display (101);
a first memory (103) to temporarily store stroke data generated by an operation event to the display (101);
a first network condition controller (105) to detect a condition of the communication network (N);
a transmitter (104) to read out the stroke data from the first memory (103) and to transmit the stroke data to the image processing apparatus (2) via the communication network (N) based on the condition of the communication network (N) detected by the first network condition controller (105);
an operation condition display controller (106) to display a first image, generated from the stroke data, on the display (101); and
an image display controller (109) to display an image received from the image processing apparatus (2) on a layer different from a layer displaying the first image,
the image processing apparatus (2) including:
a second memory (202) to temporarily store stroke data sequentially received from the electronic information terminal (1) via the communication network (N) as a string of stroke data;
a second image generator (203) to generate a second image based on the string of stroke data stored in the second memory (202);
an image synthesizer (206) to synthesize the second image displayed on a layer and a background image to be displayed on a layer, different from the layer displaying the second image, as a synthesized image;
a display unit (205) to display the synthesized image generated by the image synthesizer (206) or the background image;
an image transmitter (207) to transmit the synthesized image or the background image displayed by the display unit (205) to the electronic information terminal (1);
a background image switching unit (205) to switch the background image displayed by the display unit (205) to another background image; and
an event transmitter (204) to transmit an image switching notice to the electronic information terminal (1) when the background image switching unit (205) switches the background image displayed by the display unit (205) to the another background image,
wherein the operation condition display controller (106) deletes the first image when the electronic information terminal (1) receives the image switching notice from the image processing apparatus (2).

9. The electronic information terminal (1) of claim 1, further comprising:
an operation condition display controller (106) to display a first image, generated from the stroke data, on the display (101); and
an image display controller (109) to display an image received from the image processing apparatus (2) on a layer different from a layer displaying the first image,
wherein the operation condition display controller (106) deletes the first image when the operation condition display controller (106) receives an image switching notice, from the image processing apparatus (2), that indicates that a background image displayed on a layer different from a layer displaying a second image generated from the stroke data transmitted from the transmitter (104) and displayed by a display unit (205) of the image processing apparatus (2) is switched to another background image.

10. An image processing system comprising:
the electronic information terminal (1) of any one of claims 1 to 4; and
the image processing apparatus (2) of any one of claims 5 to 7.
